# EUROPEAN PATENT SPECIFICATION

(11) **EP 4 006 871 B1**
(45) Date of publication and mention of the grant of the patent: **17.04.2024**
(21) Application number: 20847075.7
(22) Date of filing: 08.04.2020
(51) Int. Cl.: G08G 1/0962, G08G 1/0968, G01C 21/36

(54) **VEHICLE-MOUNTED INSTRUMENT, AUDIO INFORMATION OUTPUT METHOD, AND AUDIO INFORMATION OUTPUT PROGRAM**
FAHRZEUGMONTIERTES INSTRUMENT, AUDIOINFORMATIONSAUSGABEVERFAHREN UND AUDIOINFORMATIONSAUSGABEPROGRAMM
INSTRUMENT MONTÉ SUR VÉHICULE, PROCÉDÉ DE SORTIE D'INFORMATIONS AUDIO ET PROGRAMME DE SORTIE D'INFORMATIONS AUDIO

(30) Priority: 30.07.2019 JP 2019139332
(43) Date of publication of application: 01.06.2022
(73) Proprietor: JVCKenwood Corporation, Yokohama-shi, Kanagawa 2210022 (JP)
(72) Inventor: KIMURA Naoto, Yokohama-shi, Kanagawa 221-0022 (JP)
(74) Representative: Carstens, Dirk Wilhelm
(86) International application number: PCT/JP2020/015851
(87) International publication number: WO 2021/019841

(56) References cited:
- JP-A- 2001 116 581
- JP-A- 2004 361 299
- JP-A- 2005 181 205
- JP-A- 2008 122 495
- JP-A- 2014 025 780
- US-A1- 2017 346 872

## Description

### [TECHNICAL FIELD]

The present disclosure relates to a vehicle on-board device, a voice information output method, and a voice information output program with which voice information generated as the vehicle travels and a reproduced musical piece are output from an audio output unit.

### [BACKGROUND ART]

Navigation devices that operate in conjunction with audio devices are known as devices that are mounted on vehicles. A navigation device according to one example predicts the location at which the vehicle will be traveling at the time when there is an interval between musical pieces being reproduced by the audio device. In a case where a guidance point on a travel route at which voice guidance is to be provided is in the vicinity of the predicted location, the guidance point is moved to the predicted location. This movement makes it easier for the voice guidance of the guidance point to be executed in the interval between musical pieces (Patent Literature 1).
JP 2001 116581 A discloses a navigation apparatus forming guide speech as a vehicle runs, and outputs the guide speech with an interruption signal including a priority set according to contents of the formed guide speech to an audio apparatus. When the priority of the guide speech set to the interruption signal is high, the audio apparatus temporarily stops a music being reproduced, and outputs the guide speech outputted from the navigation apparatus through a speaker. After a predetermined time has passed since the temporary stop, the temporary stop is relieved and the music is resumed to be reproduced. On the other hand, when the priority of the guide speech set to the interruption signal is low, the audio apparatus continuously reproduces the music up to an interval of the music. The audio apparatus temporarily stops the reproduction at the interval of the music and outputs a request signal for the guide speech to the navigation apparatus.

### [CITATION LIST]

### [PATENT LITERATURE]

Patent Literature 1: Japanese Unexamined Patent Application Publication No. 2011-95142

### [SUMMARY OF THE INVENTION]

The invention is set out in the appended set of claims.

In order to predict the traveling location of the vehicle at the time when there is an interval between musical pieces being reproduced, the traveling speed and the current position of the vehicle are required in addition to the time required until there is an interval between musical pieces. In particular, the traveling speed of the vehicle may change in the future depending on the road conditions on which the vehicle is traveling or other conditions. Therefore, in order to accurately execute the voice guidance of the guidance point in the interval between musical pieces being reproduced, it is essential to predict a traveling location that follows the change in the traveling speed of the vehicle. This kind of prediction of a traveling location requires a large amount of arithmetic processing as compared with mere output of the voice guidance.

An object of an embodiment is to make it easier for voice information generated as the vehicle travels to be output in the interval between musical pieces being reproduced, without performing a large amount of arithmetic processing.

A first aspect of an embodiment provides an on-board device including: a voice output unit mounted on a vehicle; a determiner configured to determine whether or not voice information generated in connection with traveling of the vehicle and output from the voice output unit is information for which an output point of the voice information is specified, wherein the output point corresponds to a guide point to be reached by the vehicle; a musical piece interval detector configured to detect a time point at which there arrives an interval between musical pieces being reproduced, which are output from the voice output unit; and an output controller configured to cause the voice output unit to output therefrom the voice information determined by the determiner as being information for which the output point is specified, when the vehicle arrives at the output point of the voice information for which the output point is specified, during reproduction of a musical piece, and to change an output time to an arrival time of the interval between musical pieces when the output time, which is specified for the voice information determined by the determiner as not being information for which the output point is specified, arrives at a time point other than the interval between musical pieces.

A second aspect of an embodiment provides a voice information output method according to claim 7.

A third aspect of an embodiment provides a voice information output program according to claim 8.

According to the embodiment, it is possible to make it easier for voice information generated as the vehicle travels to be output in the interval between musical pieces being reproduced, without performing a large amount of arithmetic processing.

### [BRIEF DESCRIPTION OF THE DRAWINGS]

FIG. 1 is a block diagram illustrating a basic configuration of a voice information output system according to an embodiment.
FIG. 2 is a flowchart illustrating a procedure of a voice information output method executed in the voice information output system of FIG. 1.
FIG. 3A is flowchart illustrating a part of the processing procedure performed by the central processing unit of FIG. 1 executing a program stored in the storage unit of the microcomputer.
FIG. 3B is flowchart illustrating a part of the processing procedure performed by the central processing unit of FIG. 1 executing a program stored in the storage unit of the microcomputer.

### [DESCRIPTION OF EMBODIMENTS]

Hereinafter, an embodiment will be described with reference to the accompanying drawings. The same or equivalent parts or components are designated by the same reference numerals throughout the drawings.

The following embodiment exemplifies an apparatus and the like for embodying the technical idea of the present invention. The technical idea of the present invention does not limit the material, shape, structure, arrangement, or the like of each component to that described hereinafter.

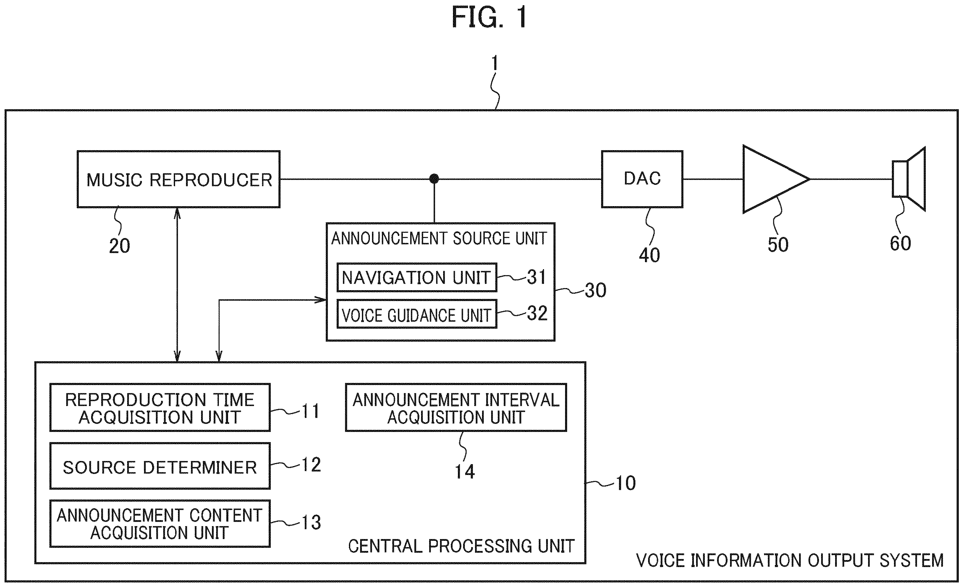

FIG. 1 is a block diagram illustrating a basic configuration of a voice information output system 1 according to the embodiment. The voice information output system 1 according to the embodiment shown in FIG. 1 is mounted on an unillustrated vehicle and used. The voice information output system 1 includes a central processing unit 10, a music reproducer 20, an announcement source unit 30, a digital-to-analog converter (DAC) 40, an amplifier 50, and a speaker 60 (corresponding to the voice output unit in the claims).

Note that the voice information output system 1 according to the embodiment can be configured as a single device by means of a display audio device with a car navigation function. In this configuration, the display audio device with a car navigation function corresponds to the on-board device in the claims.

Here, the display audio device is a car audio device including a display. The display audio device includes a processor and a storage unit. An operating system executed by the processor or system software of an embedded system is installed in the storage unit. In a case where the system software is an operating system, an application program that can be run on the operating system can be further installed in the storage unit.

By causing the processor to execute the embedded system or the application program, the display audio device can perform operations according to various functions in response to the touch panel operations on the display and the like.

Moreover, the voice information output system 1 according to the embodiment can be configured by linking a single-function display audio device built into the vehicle and an external terminal device having a car navigation function. The display audio device and the terminal device can be connected via a Universal Serial Bus (USB) interface or wireless communication or the like, for example. In this configuration, the single-function display audio device corresponds to the on-board device in the claims. The terminal device with a car navigation function can be realized by a smartphone, a tablet terminal, or the like in which application software for car navigation is installed, for example.

Furthermore, the voice information output system 1 according to the embodiment can be configured by linking a single-function car navigation device built into the vehicle and an external terminal device having a music reproducing function. The car navigation device and the terminal device can be connected via a USB interface or wireless communication or the like, for example. In this configuration, the single-function car navigation device corresponds to the on-board device in the claims. The terminal device with a music reproducing function can be realized by a smartphone, a tablet terminal, or the like in which music reproducing application software is installed, for example.

The central processing unit 10 (corresponding to the computer in the claim) is a processor equipped with an unillustrated microcomputer. As this processor, the processor in the microcomputer of the display audio device with a car navigation function, the single-function display audio device, or the single-function car navigation device can be used.

The central processing unit 10 virtually realizes a reproduction time acquisition unit 11, a source determiner 12, an announcement content acquisition unit 13, and an announcement interval acquisition unit 14 by executing a program stored in an unillustrated storage unit of the microcomputer.

Note that the reproduction time acquisition unit 11, the source determiner 12, the announcement content acquisition unit 13, and the announcement interval acquisition unit 14 can also be physically configured by means of a programmable logic controller such as a sequencer, a discrete circuit, or an integrated circuit, for example. Moreover, the reproduction time acquisition unit 11, the source determiner 12, the announcement content acquisition unit 13, and the announcement interval acquisition unit 14 may be configured by means of a combination of hardware and software. The details of the reproduction time acquisition unit 11, the source determiner 12, the announcement content acquisition unit 13, and the announcement interval acquisition unit 14 will be described later.

The music reproducer 20 reproduces musical pieces that are output from the speaker 60. In a case where the display audio device with a car navigation function or the single-function display audio device is used as the voice information output system 1 according to the embodiment, the music reproducer 20 can be configured by means of a disc drive (not shown) of the display audio device. The disc drive reads music data from a music medium such as a music compact disc (CD) or the like.

Moreover, in a case where the single-function car navigation device is used as the voice information output system 1 according to the embodiment, the music reproducer 20 can be configured by means of a terminal device with a music reproducing function connected to the single-function car navigation device. The terminal device with a music reproducing function reads music data from an unillustrated data storage device by executing the music reproducing application software installed in the terminal device.

Note that the music reproducer 20 reads music data and its attribute information from a music medium such as a compact disc (CD) or a DVD disc, or a data storage device such as a flash memory or the like, in response to a request from the central processing unit 10. In addition, the music reproducer 20 outputs the read music data and its attribute information to the central processing unit 10. The attribute information of the music data may include a song name, the playing time of the musical piece, an artist name, an album title, or the like, for example.

The announcement source unit 30 generates data for voice information that is generated in connection with the traveling of the vehicle and output from the speaker 60. The announcement source unit 30 includes a navigation unit 31 and a voice guidance unit 32.

The navigation unit 31 searches for a route from the current position of the vehicle to a destination, and generates navigation voice information. The navigation voice information is voice information that is assumed to be output by the speaker 60 when the vehicle reaches a guide point (corresponding to the output point in the claims) on a found route. By means of this voice, the driver of the vehicle can be guided along the future course of the vehicle to be driven after the guide point. The current position of the vehicle can be obtained using a navigation satellite system or a sensor or the like, for example.

As the navigation satellite system, a global navigation satellite system or a radio navigation satellite system can be used, for example. Typically, the global navigation satellite system is the Global Positioning System. As sensors, the combination of a gyro sensor and an accelerometer can be used, for example. The navigation satellite system and the sensors may be used together.

The route to the destination can be determined by selecting appropriate nodes and links as a route connecting the current position of the vehicle and the destination from among a plurality of nodes and links constituting the road information, for example.

Note that in a case where the display audio device with a car navigation function is used as the voice information output system 1 according to the embodiment, the navigation unit 31 can be configured by means of the car navigation function part of the display audio device. Moreover, in a case where the single-function car navigation device is used as the voice information output system 1 according to the embodiment, the navigation unit 31 can be configured by means of the car navigation device.

Furthermore, in a case where the single-function display audio device is used as the voice information output system 1 according to the embodiment, the navigation unit 31 can be configured by means of the terminal device with a car navigation function connected to the single-function display audio device.

The voice guidance unit 32 generates voice information for providing guidance for the information generated in connection with the traveling of the vehicle by voice. The voice guidance unit 32 can be configured by means of the display audio device with a car navigation function, the single-function display audio device, or the single-function car navigation device. The voice information generated by the voice guidance unit 32 can be content according to a menu item set in the display audio device or the car navigation device.

Examples of the menu items that can be set include: a break recommendation to the driver of the vehicle, an alert notification to the driver according to a set value of a timer, weather guidance, artist information of a reproduced musical piece, information from the previous time of passing, fuel level information, road traffic information, and vehicle maintenance information. The setting operations related to these menu items can be performed on the touch panel (not shown) of the display of the display audio device or the car navigation device.

In a case where the menu item of a break recommendation is set, the voice guidance unit 32 generates voice information of a message prompting the driver of the vehicle to take a break. In a case where the break interval specified when setting the menu item of a break recommendation is two hours, the voice information generated by the voice guidance unit 32 may be the message "You have now been driving for two hours", for example.

Moreover, in a case where the menu item of an alert notification is set, the voice guidance unit 32 generates voice information of a message notifying that the remaining time until a set time or the remaining time until a specified time elapses has reached a certain time. The voice information generated by the voice guidance unit 32 may be the message "The set time has passed", for example.

Furthermore, in a case where the menu item of weather guidance is set, the voice guidance unit 32 generates voice information of a message indicating the weather at the current position of the vehicle as determined by the navigation unit 31. The voice information generated by the voice guidance unit 32 may be the message "A heavy rain warning has been issued beyond this point", or "Beware of strong winds beyond this point".

The menu item of the weather guidance can be realized by providing the display audio device or the car navigation device, in which the central processing unit 10 is equipped, with a function to acquire weather information from a service provider on the Internet, for example.

Moreover, in a case where the menu item of artist information of the reproduced musical piece is set, the voice guidance unit 32 generates voice information of a message that informs about the activities of the artist of the musical piece reproduced immediately prior thereto by the music reproducer 20. The voice information generated by the voice guidance unit 32 may be the message "A live concert will be held near your house on August 12th.", for example.

The menu item of artist information can be realized by providing the display audio device or the car navigation device, in which the central processing unit 10 is equipped, with a function to acquire artist information from a service provider on the Internet, for example.

Furthermore, in a case where the menu item of the information from the previous time of passing is set, the voice guidance unit 32 generates voice information of a message that informs of the situation when the vehicle last passed the current position. This voice information can be generated based on the music reproduction history as determined by the music reproducer 20 and the travel history of the current position as determined by the navigation unit 31, for example. The voice information generated by the voice guidance unit 32 may be the message "The song reproduced when the vehicle last passed here was ... by so-and-so.", or "The last time you passed here was March 25th.", for example.

The menu item of information from the previous time of passing can be realized by providing the display audio device or the car navigation device, in which the central processing unit 10 is equipped, with a function to store history information. The history information may be a table in which the places the vehicle has passed in the past are associated with the date and time of passing through each place or each musical piece reproduced while passing through each place, for example.

Note that the history information may be stored in a device other than the display audio device or the car navigation device. Specifically, the history information may be stored in a terminal device linked with the display audio device or the car navigation device, for example. Alternatively, the history information may be stored in a server connected to the display audio device or the car navigation device by wireless communication.

Moreover, in a case where the menu item of fuel level information is set, the voice guidance unit 32 generates voice information of a message that informs of the remaining fuel level of the vehicle. The voice information generated by the voice guidance unit 32 may be the message "Gasoline is running low. The nearest gas station is one kilometer away", for example.

The menu item of fuel level information can be realized by providing the display audio device or the car navigation device, in which the central processing unit 10 is equipped, with a function to acquire information on the remaining fuel amount of the vehicle from the vehicle control system. The function of the display audio device or the car navigation device acquiring vehicle information from the vehicle control system can be realized by the communication protocols such as a Controller Area Network (CAN) or the like, for example.

Furthermore, in a case where the menu item of road traffic information is set, the voice guidance unit 32 generates voice information of a message that informs of the current position or the road traffic information on the traveling route to the destination as determined by the navigation unit 31. The voice information generated by the voice guidance unit 32 may be the message "There is a traffic jam one kilometer ahead", for example.

Moreover, in a case where the menu item of the vehicle maintenance information is set, the voice guidance unit 32 generates voice information of a message that informs of the maintenance information of the vehicle. The voice information generated by the voice guidance unit 32 may be the message "The oil is low" or "The tire pressure is low", for example.

The menu item of vehicle maintenance information can be realized by providing the display audio device or the car navigation device, in which the central processing unit 10 is equipped, with a function to acquire the vehicle maintenance information from the vehicle control system.

The DAC 40 converts the music data from the music reproducer 20 or the voice information data from the announcement source unit 30 from digital to analog, and outputs the converted analog signal to the amplifier 50. The amplifier 50 amplifies the analog signal from the DAC 40 and outputs it to the speaker 60. The speaker 60 outputs sound due to the analog signal amplified by the amplifier 50, and outputs the sound of the musical piece reproduced by the music reproducer 20 or the message output from the announcement source unit 30.

Next, the processing performed by the reproduction time acquisition unit 11, the source determiner 12, the announcement content acquisition unit 13, and the announcement interval acquisition unit 14, which are virtually realized by the central processing unit 10, will be described. In the following description, it is assumed that the menu item of a break recommendation is set in the display audio device or the car navigation device that constitutes the voice guidance unit 32.

The reproduction time acquisition unit 11 acquires the remaining playing time of the musical piece being reproduced by the music reproducer 20. The remaining playing time can be obtained by subtracting the reproduction time of the musical piece that has already elapsed from the playing time of the musical piece being reproduced, which is included in the attribute information of the music data read by the music reproducer 20. The source determiner 12 determines which of the music data from the music reproducer 20 and the voice data from the announcement source unit 30 is to be converted from digital to analog by the DAC 40.

The announcement content acquisition unit 13 obtains the voice information data to be output by the announcement source unit 30, and acquires the content. That is, the announcement content acquisition unit 13 determines whether the content of the data obtained from the announcement source unit 30 is the voice information generated by the navigation unit 31 or the voice guidance unit 32. In other words, the announcement content acquisition unit 13 determines the attributes of the voice information data output from the navigation unit 31.

The announcement interval acquisition unit 14 acquires the break interval specified at the time of setting the menu item of a break recommendation for the device constituting the voice guidance unit 32 from the voice guidance unit 32. The break interval may be two hours, for example.

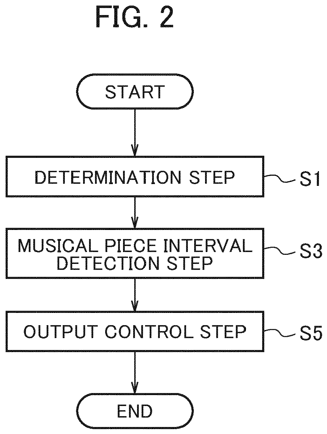

The voice information output system 1 according to the embodiment executes a voice information output method, by utilizing the result of the processing performed by each unit 11 to 14 of the central processing unit 10 described above. According to the voice information output method, voice information based on data generated by the announcement source unit 30 is output from the speaker 60 during reproduction of a musical piece by the music reproducer 20 or an interval between musical pieces. Hereinafter, one example of the voice information output method executed by the voice information output system 1 according to the embodiment will be described with reference to the flowchart of FIG. 2.

Note that in a case where the voice information output system 1 is configured by means of a single device, a voice information output program for causing the central processing unit 10 to execute the processes of each step shown in FIG. 2 is stored in the storage unit of the unillustrated microcomputer. The storage unit is a non-transitory storage medium.

As shown in FIG. 2, the voice information output method according to the embodiment includes a determination step, a musical piece interval detection step, and an output control step (steps S1, S3, and S5).

Among these steps, the determination step of step S1 is a step of determining whether or not the voice information generated in connection with the traveling of the vehicle and output from the speaker 60 is information that specifies the point (location) at which the voice information is to be output. That is, the determination step can be executed by the central processing unit 10 determining whether the data output by the announcement source unit 30 of FIG. 1 is voice information that provides guidance for the future course at a guide point generated by the navigation unit 31.

Next, the musical piece interval detection step of step S3 shown in FIG. 2 is a step of detecting the time point at which the interval between musical pieces being reproduced, which are output from the speaker 60, arrives. The musical piece interval detection step can be executed by the central processing unit 10 specifying the time point at which the interval between musical pieces being reproduced by the music reproducer 20 arrives, based on the playing time of the musical piece being reproduced acquired by the reproduction time acquisition unit 11 of FIG. 1.

Subsequently, the output control step of step S5 shown in FIG. 2 is a step for targeting the voice information determined in step S1 as not having a specified output point at which the voice information is to be output. In the output control step, when the output time of the voice information specified for the voice information arrives at a time other than the interval between musical pieces being output from the speaker 60, the output time of the voice information is changed to the arrival time of the interval between the musical pieces.

That is, the output control step can be executed, when the data output by the announcement source unit 30 of FIG. 1 is the voice information of the message generated by the voice guidance unit 32 prompting the driver to take a break at each break interval. In the output control step, the central processing unit 10 changes the time point at which the message prompting the driver of the vehicle to take a break is output from the speaker 60 to the time point at which the interval between the musical pieces arrives, when the break interval of the driver of the vehicle arrives at a time point close to the interval between the musical pieces before or after the interval between the musical pieces being reproduced specified in step S3.

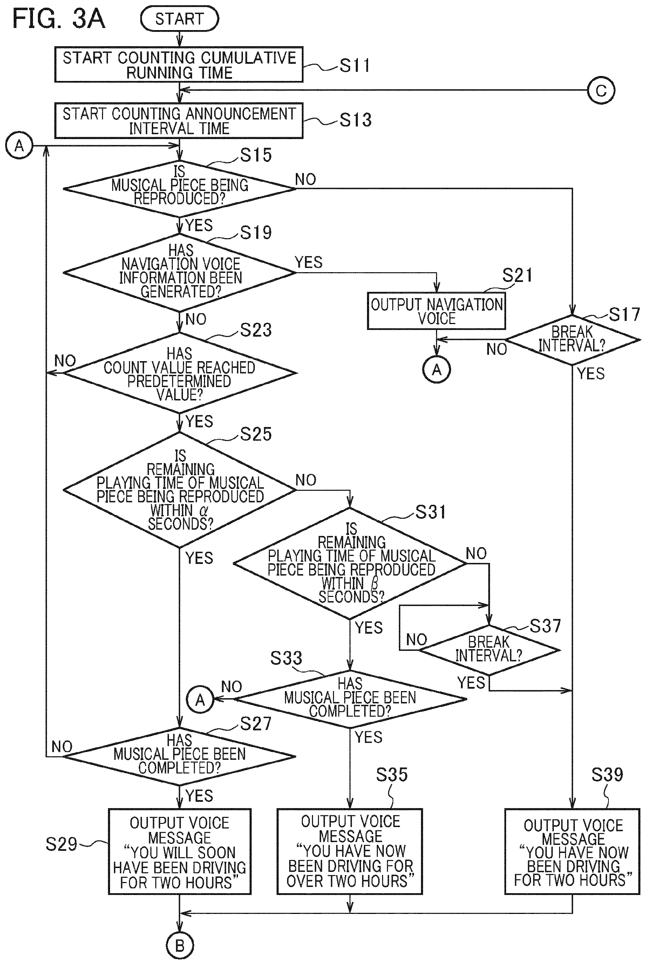

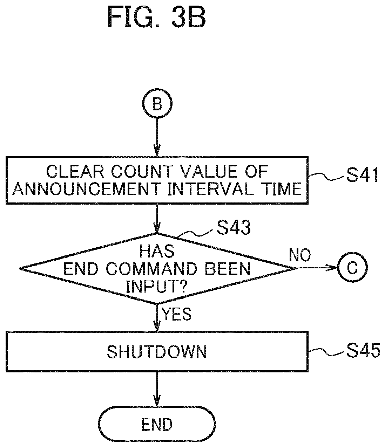

Next, in order to carry out the voice information output method shown in steps S1 to S5 of FIG. 2, an example of the processing procedure executed by the central processing unit 10 of FIG. 1 according to the program stored in the storage unit of the microcomputer will be described with reference to the flowcharts of FIGS. 3A and 3B.

First, as shown in FIG. 3A, the central processing unit 10 counts the cumulative running time of the program executed by the central processing unit 10 (step S11). Subsequently, the central processing unit 10 starts counting the announcement interval time (step S13).

The count value of the announcement interval time is a numerical value indicating the elapsed time after the message prompting the driver to take a break is output from the speaker 60. Note that in the stage before the message prompting the driver to take a break is first output from the speaker 60, the count value of the announcement interval time is a numerical value indicating the elapsed time from the start of driving of the vehicle.

Next, the central processing unit 10 confirms whether or not a musical piece is being reproduced (step S15). The central processing unit 10 can confirm whether or not a musical piece is being reproduced depending on whether or not the reproduction time of the music being reproduced obtained by the reproduction time acquisition unit 11 has reached the playing time of the musical piece being reproduced by the music reproducer 20, for example. The playing time of the musical piece being reproduced can be obtained from the attribute information of the music data read by the music reproducer 20. If a musical piece is not being reproduced (NO in step S15), the central processing unit 10 confirms whether or not the count value of the announcement interval time has reached the break interval (step S17).

If the count value of the announcement interval time has not reached the break interval (NO in step S17), the process returns to step S15. If the count value of the announcement interval time has reached the break interval (YES in step S17), the process transitions to step S39 described later.

On the other hand, if a musical piece is being reproduced (YES) in step S15, the central processing unit 10 confirms whether or not navigation voice information has been generated in the navigation unit 31 (step S19). If navigation voice information has been generated (YES in step S19), the central processing unit 10 causes the speaker 60 to output the navigation voice providing guidance for the future course of the vehicle therefrom (step S21), and then the process returns to step S15. Note that the central processing unit 10 executes the output of the navigation voice from the speaker 60 by using the navigation voice information generated by the navigation unit 31.

When outputting the navigation voice from the speaker 60, the central processing unit 10 may lower the output level of the musical piece being reproduced by the music reproducer 20 to a lower level including mute in consideration of the ease of hearing the navigation voice. Needless to say, the output level of the musical piece may be maintained at the previous level without reducing it during the output of the navigation voice.

Moreover, if navigation voice information has not been generated (NO in step S19), the central processing unit 10 confirms whether or not the count value of the announcement interval time has reached a predetermined value (step S23).

Here, the predetermined numerical value is a numerical value for defining, as a length of time, a target for the message prompting the driver to take a break, which arrives earlier than the break interval and is output from the speaker 60 by shifting it to an interval between musical pieces being reproduced. For example, when a message prompting the driver to take a break at a break interval that arrives within five minutes after the arrival of an interval between musical pieces is set as a target to be moved forward to the interval between musical pieces and output from the speaker 60, the predetermined numerical value can be set as one hour and 55 minutes, which is obtained by subtracting five minutes from two hours which is the break interval. Note that the five minutes here corresponds to the threshold value for the time difference between the output time of the voice information and the arrival time of the interval between musical pieces in the claims.

If the count value of the announcement interval time has not reached a predetermined value (NO in step S23), the process returns to step S15. If the count value of the announcement interval time has reached a predetermined value (YES in step S23), the central processing unit 10 confirms whether or not the remaining playing time of the musical piece confirmed as being reproduced in step S15 is within α seconds (step S25).

Here, α seconds may be set to five minutes, which is the difference between the break interval and a predetermined numerical value, that is, a number of seconds shorter than 300 seconds, for example. The remaining playing time is acquired by using the reproduction time acquisition unit 11 described above.

If the remaining playing time of the musical piece is within α seconds (YES in step S25), the central processing unit 10 confirms whether or not the reproduction of the musical piece has been completed (step S27). If the reproduction of the musical piece has not been completed (NO in step S27), the process returns to step S15. If the reproduction of the musical piece has been completed (YES in step S27), the central processing unit 10 corrects the content of the message prompting the driver to take a break and causes the speaker 60 to output the corrected message therefrom (step S29), and then transitions the process to step S41, which will be described later.

Note that in the process of step S29, the central processing unit 10 acquires the data of the message prompting the driver to take a break by means of the announcement content acquisition unit 13. In addition, the central processing unit 10 executes the output of the message prompting the driver to take a break from the speaker 60 by using the source determiner 12.

When the message is output from the speaker 60, the central processing unit 10 delays the start of the reproduction of the next musical piece by the music reproducer 20 until the output of the message is completed. In addition, the central processing unit 10 starts the reproduction of the next musical piece by the music reproducer 20 after the output of the message is completed.

Moreover, in the process of step S29, the central processing unit 10 corrects the content of the message prompting the driver to take a break, for which the data has been acquired by the announcement content acquisition unit 13, to content suitable for outputting the message from the speaker 60 in the interval between musical pieces before the break interval. For example, the central processing unit 10 corrects the content of the message "You have now been driving for two hours" to "You will soon have been driving for two hours", and outputs this from the speaker 60 using the source determiner 12.

On the other hand, in step S25, if the remaining playing time of the musical piece is not within α seconds (NO), the central processing unit 10 confirms whether or not the remaining playing time of the musical piece confirmed as being reproduced in step S15 is within β (β>α) seconds (step S31) .

Here, β seconds is a numerical value for defining, as a length of time, a target for the message prompting the driver to take a break, which arrives later than the break interval and is output from the speaker 60 by shifting it to an interval between musical pieces being reproduced. For example, when a message prompting the driver to take a break at a break interval from which an interval between musical pieces arrives within one minute is set as a target to be moved backward to the interval between musical pieces and output from the speaker 60, a number of seconds obtained by adding one minute, sixty seconds in other words, to α seconds can be set as β seconds. Note that the one minute here corresponds to the threshold value for the time difference between the output time of the voice information and the arrival time of the interval between musical pieces in the claims.

If the remaining playing time of the music is within β seconds (YES in step S31), the central processing unit 10 confirms whether or not the reproduction of the musical piece being reproduced has been completed (step S33). If the reproduction of the musical piece has not been completed (NO in step S33), the process returns to step S15. If the reproduction of the musical piece has been completed (YES in step S33), the central processing unit 10 corrects the content of the message prompting the driver to take a break and causes the speaker 60 to output the corrected message therefrom (step S29), and then transitions the process to step S41.

When the message with the corrected content is output from the speaker 60, the central processing unit 10 delays the start of the reproduction of the next musical piece by the music reproducer 20 until the output of the message is completed. In addition, the central processing unit 10 starts the reproduction of the next musical piece by the music reproducer 20 after the output of the message is completed.

Note that in the process of step S35, the central processing unit 10 corrects the content of the message prompting the driver to take a break, for which the data has been acquired by the announcement content acquisition unit 13, to content suitable for outputting the message from the speaker in the interval between musical pieces after the break interval. For example, the central processing unit 10 corrects the content of the message "You have now been driving for two hours" to "You have now been driving for over two hours", and outputs this from the speaker 60 using the source determiner 12.

Moreover, in step S31, if the remaining playing time of the music is not within β seconds (NO), the central processing unit 10 confirms whether or not the count value of the announcement interval time has reached the break interval (step S37).

If the count value of the announcement interval time has not reached the break interval (NO in step S37), the central processing unit 10 repeats step S37 until the count value reaches the break interval. If the count value of the announcement interval time has reached the break interval (YES in step S37), the central processing unit 10 transitions the process to step S41.

The process of step S37 is a process executed when the accuracy of the output timing of the message prompting the driver to take a break lowers significantly. That is, if the remaining time until the break time and the remaining playing time of the musical piece deviate from each other, the end of reproducing the musical piece at which the message is output in the process of step S35 will occur at a point when a long time has passed since the arrival of the break time. Even if a message prompting the driver to take a break is output at this point, the driver cannot be prompted to take a break at an appropriate timing.

Therefore, in the process of step S31, β seconds which is to be compared with the remaining playing time of the music may be set longer so that the process of step S37 is substantially not performed. In this case, β seconds can be set to a number of seconds longer than the expected maximum playing time of the musical piece, for example. Moreover, in the process of step S25, α seconds which is to be compared with the remaining playing time of the musical piece may be set longer, and as a result, β seconds which is longer than α seconds may be set to the longer number of seconds as described above.

In step S39, the central processing unit 10 causes the speaker 60 to output the message prompting the driver to take a break of "You have now been driving for two hours", for which the data has been acquired by the announcement content acquisition unit 13, from the speaker 60 using the source determiner 12. Then, the central processing unit 10 transitions the process to step S41.

Note that the process of step S39 is executed during the reproduction of the musical piece by the music reproducer 20. Therefore, in the process of step S39, the message prompting the driver to take a break is output from the speaker 60 together with the music. When outputting the navigation voice from the speaker 60, the central processing unit 10 may lower the output level of the musical piece being reproduced by the music reproducer 20 to a lower level including mute in consideration of the ease of hearing the message. Alternatively, the central processing unit 10 may suspend the reproduction of the musical piece by the music reproducer 20 while the message is output from the speaker 60.

As shown in FIG. 3B, in step S41, the central processing unit 10 clears the count value of the announcement interval time. Then, the central processing unit 10 confirms whether or not an end command for the operation of the voice information output system 1 has been input (step S43). The end of the operation of the voice information output system 1 can be instructed by performing an end operation on the touch panel of the display of the display audio device or the car navigation device, for example.

If an end command has not been input (NO in step S43), the process returns to step S13. If an end command has been input (YES in step S43), the central processing unit 10 processes the shutdown of the audio information output system 1 (step S45), and then ends the series of processes.

As is clear from the above description, in the voice information output system 1 according to the embodiment, steps S19 and S23 in the flowchart of FIG. 3A are processes corresponding to the determiner and the determination step in the claims. Moreover, in the voice information output system 1 according to the embodiment, steps S27 and S33 in FIG. 3A are processes corresponding to the musical piece interval detector and the musical piece interval detection step in the claims. Furthermore, in the voice information output system 1 according to the embodiment, steps S25 to S35 in FIG. 3A are processes corresponding to the output controller and the output control step in the claims.

That is, in the voice information output system 1 according to the embodiment, the central processing unit 10 corresponds to the determiner, the musical piece interval detector, and the output controller in the claims.

In the voice information output system 1 according to the embodiment described above, when the navigation voice information for providing guidance for the future course of the vehicle is generated by the navigation unit 31, the navigation voice is output from the speaker 60 regardless of whether the music reproducer 20 is reproducing a musical piece. Moreover, when a voice message prompting the driver to take a break is generated by the voice guidance unit 32, the voice message is output from the speaker 60 by shifting from the time when the break interval arrives to the time when an interval between musical pieces arrives, in a case where the driver's break interval comes between five minutes before and one minute after the interval between musical pieces.

Here, the navigation voice for providing guidance for the future course of the vehicle needs to be output from the speaker 60 before the vehicle travels on the future course for which guidance is to be provided by the navigation voice. Accordingly, in order to output the navigation voice from the speaker 60 in the interval between musical pieces, it is essential to predict the traveling location of the vehicle in the interval between musical pieces, and to confirm that the predicted traveling location is before the future course for which guidance is to be provided by the navigation voice.

In order to accurately predict the future traveling location of the vehicle, it is necessary to predict the traveling location by reflecting changes in the traveling speed of the vehicle. For that purpose, it is necessary to frequently perform the process of calculating the mileage from the traveling speed of the vehicle in a short cycle. In addition, if the destination of the vehicle is changed on the way, or the vehicle travels on a route deviating from the route found by the navigation unit 31, the route to the destination on which the vehicle travels thereafter changes. Therefore, it is necessary to re-predict the future traveling location of the vehicle. Accordingly, a large amount of arithmetic processing is required to accurately output the navigation voice in the interval between musical pieces.

In contrast, in the embodiment, the information of the navigation voice generated by the navigation unit 31 is excluded from being a target for the voice output from the speaker 60 in an interval between musical pieces being reproduced, and the voice information of the message prompting the driver to take a break generated by the voice guidance unit 32 is set as a target for output from the speaker 60 in the interval between musical pieces. Unlike the navigation voice information, the voice information of the message prompting the driver to take a break does not have a specified point at which to be output from the speaker 60, the time for output from the speaker 60 is only specified to a specific time.

Therefore, in order to shift the output time of the voice of the message prompting the driver to take a break from the time when the break interval arrives to an interval between musical pieces being reproduced, the central processing unit 10 detects the interval between musical pieces. That is, it is not necessary for the central processing unit 10 to perform a large amount of arithmetic processing for accurately predicting a future traveling location.

According to the embodiment, it is possible that a voice message is less likely to interfere with the listening of a musical piece, by outputting the voice of a message prompting the driver to take a break, for which the break interval comes between five minutes before and one minute after an interval between musical pieces being reproduced, from the speaker 60 during the interval between the musical pieces. In addition, according to the embodiment, since the navigation voice is excluded from being a target to be output from the speaker 60 by shifting it to the interval between musical pieces, changes in the destination, the traveling route, or the traveling speed of the vehicle are less likely to affect the accuracy of outputting the voice during the interval between musical pieces. Accordingly, even when the voice of the message prompting the driver to take a break is output by being shifted to the interval between musical pieces, the message can be accurately conveyed to the driver regardless of changes in the traveling state of the vehicle.

Moreover, in the embodiment, during the reproduction of the musical pieces, the navigation voice of the course guidance generated by the navigation unit 31 is output by interrupting the reproduction of musical pieces, and the voice of the message prompting the driver to take a break generated by the voice guidance unit 32 is output by being shifted to an interval between musical pieces. Therefore, the driver can easily distinguish between the navigation voice and the voice of the message prompting the driver to take a break, and can easily select the necessary voice information.

Note that in the embodiment, the case in which the menu item of a break recommendation is set in the display audio device or the car navigation device that constitutes the voice guidance unit 32 is described. The present invention can also be implemented even when a menu item other than a break recommendation is set.

For example, in a case where the menu item of an alert notification is set, the central processing unit 10 can correct the message output from the speaker 60 during an interval between musical pieces before the alert set time to the content of "The set time will pass soon". The central processing unit 10 can correct the message output from the speaker 60 during an interval between musical pieces after the alert set time to the content of "The set time has been exceeded".

Moreover, in the embodiment, the content of the correction of the message by the central processing unit 10 is changed depending on whether the voice message prompting the driver to take a break generated by the voice guidance unit 32 is output during an interval between musical pieces that arrives earlier or later than the point at which the break interval arrives. As a result, the content of the message to be output by being shifted to an interval between musical pieces can be corrected and output according to the respective time points before and after the break interval. However, the content of the correction by the central processing unit 10 may be the same regardless of whether an interval between musical pieces arrives earlier or later than the original output time.

Furthermore, the embodiment describes a case in which the central processing unit 10 corrects the content of the message to be output, when the voice message generated by the voice guidance unit 32 is output by being shifted to the arrival time of an interval between musical pieces different from the original output time. However, the content of the audio message that is output by being shifted to the arrival time of an interval between musical pieces may not be corrected. For example, the messages for weather guidance, artist information, information from the previous time of passing, fuel level information, road traffic information, and vehicle maintenance information may be the same even when they are output by being shifted to the arrival time of an interval between musical pieces.

## Claims

1. An on-board device comprising:
a voice output unit (60) mounted on a vehicle;
a determiner (10) configured to determine whether or not voice information generated in connection with a traveling of the vehicle and output from the voice output unit (60) is information for which an output point of the voice information is specified, wherein the output point corresponds to a guide point to be reached by the vehicle;
a musical piece interval detector (10) configured to detect a time point at which there arrives an interval between musical pieces being reproduced, which are output from the voice output unit (60); and
an output controller (10) configured to cause the voice output unit (60) to output therefrom the voice information determined by the determiner (10) as being information for which the output point is specified, when the vehicle arrives at the output point of the voice information for which the output point is specified, during reproduction of a musical piece, and to change an output time to an arrival time of the interval between musical pieces, when the output time, which is specified for the voice information determined by the determiner (10) as not being information for which the output point is specified, arrives at a time point other than the interval between musical pieces.

2. The on-board device according to claim 1, wherein the output controller (10) changes the output time to the arrival time when a time difference between the output time and the arrival time is equal to or shorter than a threshold value, and causes the voice output unit (60) to output the voice information at the output time when the time difference is longer than the threshold value.

3. The on-board device according to claim 1 or 2, wherein the output controller (10) corrects content of the voice information to content suitable for outputting the voice information at the arrival time depending on a time difference between the output time and the arrival time.

4. The on-board device according to any one of preceding claims, wherein the output controller (10) causes the voice output unit (60) to output therefrom the voice information at the output point or the output time, when a musical piece is not reproduced at the output point or the output time.

5. The on-board device according to any one of preceding claims, further comprising a navigation unit configured to search for a route from a current position of the vehicle to a destination, wherein
the determiner (10) determines that voice information that provides guidance for a future course at a guide point on the route found by the navigation unit is information for which the output point is specified.

6. The on-board device according to any one of preceding claims, further comprising a music reproducer configured to reproduce the musical pieces, wherein
the musical piece interval detector (10) detects the arrival time of the musical pieces reproduced by the music reproducer and output from the voice output unit (60).

7. A voice information output method comprising:
determining whether or not voice information generated in connection with traveling of a vehicle and output from a voice output unit (60) is information for which an output point of the voice information is specified, wherein the output point corresponds to a guide point to be reached by the vehicle;
detecting a time point at which there arrives an interval between musical pieces being reproduced, which are output from the voice output unit (60);
outputting from the voice output unit (60) the voice information determined as being information for which the output point is specified, when the vehicle arrives at the output point of the voice information for which the output point is specified, during reproduction of a musical piece; and
changing an output time to an arrival time of the interval between musical pieces, when the output, which is specified for the voice information determined as not being information for which the output point is specified, arrives at a time point other than the interval between musical pieces.

8. A voice information output program for causing a computer to execute the steps of:
a determining step (S1) of determining whether or not voice information generated in connection with traveling of a vehicle and output from a voice output unit (60) is information for which an output point of the voice information is specified, wherein the output point corresponds to a guide point to be reached by the vehicle;
a detecting step (S3) of detecting a time point at which there arrives an interval between musical pieces being reproduced, which are output from the voice output unit (60); and
an output control step (S5) of outputting from the voice output unit (60) the voice information determined as being information for which the output point is specified, when the vehicle arrives at the output point of the voice information for which the output point is specified, during reproduction of a musical piece, or changing an output time to an arrival time of the interval between musical pieces, when the output time, which is specified for the voice information determined as not being information for which the output point is specified, arrives at a time point other than the interval between musical pieces.

## Patentansprüche

1. An Bord liegende Vorrichtung, die Folgendes aufweist:
eine Sprachausgabeeinheit (60), die an einem Fahrzeug montiert ist;
eine Bestimmungsvorrichtung (10), die konfiguriert ist, um zu bestimmen, ob oder ob nicht Sprachinformation, die in Verbindung mit einer Fahrt des Fahrzeugs erzeugt wird und aus der Sprachausgabeeinheit (60) ausgegeben wird, Information ist, für welche ein Ausgabepunkt der Sprachinformation festgelegt ist, wobei der Ausgabepunkt einem Führungspunkt entspricht, der von dem Fahrzeug erreicht werden soll;
einen Musikstückintervalldetektor (10), der konfiguriert ist, um einen Zeitpunkt zu detektieren, zu welchem ein Intervall zwischen wiederzugebenden Musikstücken auftritt, die aus der Sprachausgabeeinheit (60) ausgegeben werden sollen; und
eine Ausgabesteuervorrichtung (10), die konfiguriert ist, um zu bewirken, dass die Sprachausgabeeinheit (60) daraus die Sprachinformation ausgibt, die von der Bestimmungsvorrichtung (10) als Information bestimmt worden ist, für welche der Ausgabepunkt festgelegt ist, wenn das Fahrzeug an dem Ausgabepunkt der Sprachinformation ankommt, für welchen der Ausgabepunkt festgelegt ist, und zwar während der Wiedergabe eines Musikstückes, und eine Ausgabezeit auf eine Zeit des Auftretens des Intervalls zwischen Musikstücken zu ändern, wenn die Ausgabezeit, welche für die Sprachinformation festgelegt ist, die von der Bestimmungsvorrichtung (10) nicht als Information bestimmt worden ist, für welche der Ausgabepunkt festgelegt worden ist, an einem anderen Zeitpunkt auftritt als dem Intervall zwischen den Musikstücken.

2. An Bord liegende Vorrichtung nach Anspruch 1, wobei die Ausgabesteuervorrichtung (10) die Ausgabezeit auf die Zeit des Auftretens ändert, wenn eine Zeitdifferenz zwischen der Ausgabezeit und der Zeit des Auftretens gleich oder kürzer als ein Schwellenwert ist, und bewirkt, dass die Sprachausgebeinheit (60) die Sprachinformation zur Ausgabezeit ausgibt, wenn die Zeitdifferenz länger als der Schwellenwert ist.

3. An Bord liegende Vorrichtung nach Anspruch 1 oder 2, wobei die Ausgabesteuervorrichtung (10) einen Inhalt der Sprachinformation auf einen Inhalt korrigiert bzw. ändert, der zur Ausgabe der Sprachinformation zur Zeit des Auftretens geeignet ist, und zwar abhängig von einer Zeitdifferenz zwischen der Ausgabezeit und der Zeit des Auftretens.

4. An Bord liegende Vorrichtung nach einem der vorhergehenden Ansprüche, wobei die Ausgabesteuervorrichtung (10) bewirkt, dass die Sprachausgebeeinheit (60) daraus die Sprachinformation an dem Ausgabepunkt oder zur Ausgabezeit ausgibt, wenn ein Musikstück nicht am Ausgabepunkt oder zur Ausgabezeit wiedergegeben wird.

5. An Bord liegende Vorrichtung nach einem der vorhergehenden Ansprüche, die weiter eine Navigationseinheit aufweist, die konfiguriert ist, um nach einer Route von einer gegenwärtigen Position des Fahrzeugs zu einem Bestimmungsort zu suchen, wobei
die Bestimmungsvorrichtung (10) bestimmt, dass die Sprachinformation, welche eine Führung für einen zukünftigen Weg an einem Führungspunkt auf der Route, die von der Navigationseinheit gefunden wurde, Information ist, für welche der Ausgabepunkt festgelegt ist.

6. An Bord liegende Vorrichtung nach einem der vorhergehenden Ansprüche, die weiter eine Musikwiedergabevorrichtung aufweist, die konfiguriert ist, um die Musikstücke wiederzugeben, wobei
der Musikstückintervalldetektor (10) die Zeit des Auftretens der Musikstücke, die von der Musikwiedergabevorrichtung wiedergegeben werden, und die Ausgabe aus der Sprachausgabeeinheit (60) detektiert.

7. Sprachinformationsausgabeverfahren, welches Folgendes aufweist:
Bestimmen, ob oder ob nicht Sprachinformation, die in Verbindung mit einer Fahrt eines Fahrzeugs erzeugt wird und aus einer Sprachausgabeeinheit (60) ausgegeben wird, Information ist, für die ein Ausgabepunkt der Sprachinformation festgelegt ist, wobei der Ausgabepunkt einem Führungspunkt entspricht, den das Fahrzeug erreichen soll;
Detektieren eines Zeitpunktes, zu dem ein Intervall zwischen gerade wiedergegebenen Musikstücken auftritt, die aus der Sprachausgabeeinheit (60) ausgegeben werden;
Ausgeben, und zwar aus der Sprachausgabeeinheit (60) der Sprachinformation, die als Information bestimmt wurde, für welche der Ausgabepunkt festgelegt ist, wenn das Fahrzeug an dem Ausgabepunkt der Sprachinformation ankommt, für welche der Ausgabepunkt festgelegt ist, während der Wiedergabe eines Musikstücks; und
Ändern einer Ausgabezeit auf eine Zeit des Auftretens des Intervalls zwischen den Musikstücken, wenn die Ausgabe, die für die Sprachinformation festgelegt wurde, die nicht als Information bestimmt wurde, für welche der Ausgabepunkt festgelegt ist, zu einem anderen Zeitpunkt auftritt als das Intervall zwischen den Musikstücken.

8. Sprachinformationsausgabeprogramm zum Veranlassen eines Computers zur Ausführung der folgenden Schritte:
einen Bestimmungsschritt (S1) des Bestimmens, ob oder ob nicht Sprachinformation, die in Verbindung mit der Fahrt eines Fahrzeugs erzeugt wird und aus einer Sprachausgabeeinheit (60) ausgegeben wird, Information ist, für welche ein Ausgabepunkt der Sprachinformation festgelegt ist, wobei der Ausgabepunkt einem Führungspunkt entspricht, den das Fahrzeug erreichen soll;
einen Detektionsschritt (S3) des Detektierens eines Zeitpunktes, zu welchem ein Intervall zwischen gerade wiedergegebenen Musikstücken auftritt, die aus der Sprachausgabeeinheit (60) ausgegeben werden; und
einen Ausgabesteuerschritt (S5) des Ausgebens, und zwar aus der Sprachausgabeeinheit (60), der Sprachinformation, die als Information bestimmt wurde, für welche der Ausgabepunkt festgelegt ist, wenn das Fahrzeug am Ausgabepunkt der Sprachinformation ankommt, für welche der Ausgabepunkt festgelegt ist, während der Wiedergabe eines Musikstücks, oder des Änderns einer Ausgabezeit auf eine Zeit des Auftretens des Intervalls zwischen Musikstücken, wenn die Ausgabezeit, die für die Sprachinformation festgelegt wurde, welche nicht als Information bestimmt wurde, für welche der Ausgabepunkt festgelegt ist, zu einem anderen Zeitpunkt auftritt als das Intervall zwischen den Musikstücken.

## Revendications

1. Dispositif embarqué comprenant :
une unité d'émission vocale (60) montée sur un véhicule ;
un déterminant (10) configuré pour déterminer si des informations vocales générées en relation avec un déplacement du véhicule et émises par l'unité d'émission vocale (60) sont ou non des informations pour lesquelles un point de sortie des informations vocales est spécifié, dans lequel le point de sortie correspond à un point de guidage que doit atteindre le véhicule ;
un détecteur d'intervalle de morceau de musique (10) configuré pour détecter un instant auquel arrive un intervalle entre des morceaux de musique en cours de reproduction, qui sont émis par l'unité d'émission vocale (60) ; et
un contrôleur de sortie (10) configuré pour amener l'unité d'émission vocale (60) à émettre les informations vocales déterminées par le déterminant (10) comme étant des informations pour lesquelles le point de sortie est spécifié, lorsque le véhicule arrive au point de sortie des informations vocales pour lesquelles le point de sortie est spécifié, pendant la reproduction d'un morceau de musique, et pour modifier un instant de sortie en un instant d'arrivée de l'intervalle entre des morceaux de musique, lorsque l'instant de sortie, qui est spécifié pour les informations vocales déterminées par le déterminant (10) comme n'étant pas des informations pour lesquelles le point de sortie est spécifié, arrive à un instant autre que l'intervalle entre des morceaux de musique.

2. Dispositif embarqué selon la revendication 1, dans lequel le contrôleur de sortie (10) modifie l'instant de sortie en l'instant d'arrivée lorsqu'une différence de temps entre l'instant de sortie et l'instant d'arrivée est égale ou inférieure à une valeur seuil, et amène l'unité d'émission vocale (60) à émettre les informations vocales à l'instant de sortie lorsque la différence de temps est plus longue que la valeur seuil.

3. Dispositif embarqué selon la revendication 1 ou 2, dans lequel le contrôleur de sortie (10) corrige le contenu des informations vocales en un contenu adapté à l'émission des informations vocales à l'instant d'arrivée en fonction d'une différence de temps entre l'instant de sortie et l'instant d'arrivée.

4. Dispositif embarqué selon l'une quelconque des revendications précédentes, dans lequel le contrôleur de sortie (10) amène l'unité d'émission vocale (60) à émettre les informations vocales au point de sortie ou à l'instant de sortie lorsqu'un morceau de musique n'est pas reproduit au point de sortie ou à l'instant de sortie.

5. Dispositif embarqué selon l'une quelconque des revendications précédentes, comprenant en outre une unité de navigation configurée pour rechercher un itinéraire depuis une position actuelle du véhicule jusqu'à une destination, dans lequel
le déterminant (10) détermine que des informations vocales qui fournissent un guidage pour un itinéraire futur à un point de guidage sur l'itinéraire trouvé par l'unité de navigation sont des informations pour lesquelles le point de sortie est spécifié.

6. Dispositif embarqué selon l'une quelconque des revendications précédentes, comprenant en outre un lecteur de musique configuré pour reproduire les morceaux de musique, dans lequel
le détecteur d'intervalle de morceau de musique (10) détecte l'instant d'arrivée des morceaux de musique reproduits par le lecteur de musique et émis par l'unité d'émission vocale (60) .

7. Procédé d'émission d'informations vocales comprenant :
la détermination de si des informations vocales générées en relation avec un déplacement d'un véhicule et émises par une unité d'émission vocale (60) sont ou non des informations pour lesquelles un point de sortie des informations vocales est spécifié, dans lequel le point de sortie correspond à un point de guidage que doit atteindre le véhicule ;
la détection d'un instant auquel arrive un intervalle entre des morceaux de musique en cours de reproduction, qui sont émis par l'unité d'émission vocale (60) ;
l'émission par l'unité d'émission vocale (60) des informations vocales déterminées comme étant des informations pour lesquelles le point de sortie est spécifié, lorsque le véhicule arrive au point de sortie des informations vocales pour lesquelles le point de sortie est spécifié, pendant la reproduction d'un morceau de musique ; et
la modification d'un instant de sortie en un instant d'arrivée de l'intervalle entre des morceaux de musique, lorsque la sortie, qui est spécifiée pour les informations vocales déterminées comme n'étant pas des informations pour lesquelles le point de sortie est spécifié, arrive à un instant autre que l'intervalle entre des morceaux de musique.

8. Programme d'émission d'informations vocales destiné à amener un ordinateur à exécuter les étapes suivantes :
une étape de détermination (S1) de détermination de si des informations vocales générées en relation avec un déplacement d'un véhicule et émises par une unité d'émission vocale (60) sont ou non des informations pour lesquelles un point de sortie des informations vocales est spécifié, dans lequel le point de sortie correspond à un point de guidage que doit atteindre le véhicule ;
une étape de détection (S3) de détection d'un instant auquel arrive un intervalle entre des morceaux de musique en cours de reproduction, qui sont émis par l'unité d'émission vocale (60) ; et
une étape de commande de sortie (S5) d'émission par l'unité d'émission vocale (60) des informations vocales déterminées comme étant des informations pour lesquelles le point de sortie est spécifié, lorsque le véhicule arrive au point de sortie des informations vocales pour lesquelles le point de sortie est spécifié, pendant la reproduction d'un morceau de musique, ou de modification d'un instant de sortie en un instant d'arrivée de l'intervalle entre des morceaux de musique, lorsque l'instant de sortie, qui est spécifié pour les informations vocales déterminées comme n'étant pas des informations pour lesquelles le point de sortie est spécifié, arrive à un instant autre que l'intervalle entre des morceaux de musique.
